# EUROPÄISCHE PATENTSCHRIFT

(11) **EP 3 130 523 B1**
(45) Veröffentlichungstag und Bekanntmachung des Hinweises auf die Patenterteilung: **17.10.2018**
(21) Anmeldenummer: 16183337.1
(22) Anmeldetag: 09.08.2016
(51) Int. Cl.: B62B 3/06

(54) **FLURFÖRDERZEUG MIT PALETTENHALTER**
INDUSTRIAL TRUCK WITH PALLET HOLDER
CHARIOT DE MANUTENTION DOTÉ D'UN SUPPORT DE PALETTES

(30) Priorität: 10.08.2015 DE 102015113169
(43) Veröffentlichungstag der Anmeldung: 15.02.2017
(73) Patentinhaber: Jungheinrich Aktiengesellschaft, 22047 Hamburg (DE)
(72) Erfinder: Helbach, Aimo, 21379 Scharnebeck (DE); Helbach, Astrid, 21379 Scharnebeck (DE); Hoyer, Andreas, 21335 Lüneburg (DE)
(74) Vertreter: Hauck Patentanwaltspartnerschaft mbB

(56) Entgegenhaltungen:
- DE-A1-102012 112 428
- DE-A1-102013 010 656
- US-A1- 2005 104 308
- US-A1- 2009 183 953
- US-B1- 7 819 407
- US-B1- 8 356 783

## Beschreibung

Die Erfindung bezieht sich auf ein Flurförderzeug mit einem Palettenhalter nach dem Patentanspruch 1.

Aus DE 10 2013 010 656 A1 ist ein Flurförderzeug mit einem Palettenhalter bekannt geworden. Der Palettenhalter ist im oberen Bereich des Lastteils angeordnet. Er ist als Haken bzw. Schnapphaken ausgebildet, der in seiner die Palette sichernden Position federvorgespannt ist. Der die stehende Palette haltende Haken kann in seiner Halteposition verriegelt sein und mit Hilfe eines Entriegelungshebels in die Freigabeposition verschwenkt werden.

Aus DE 10 2012 112 428 ist ein Flurförderzeug mit einem Palettenhalter bekannt geworden. Der Palettenhalter besitzt ein Verriegelungsmittel, das mit Hilfe von Zapfen in vertikal aufgestellten Führungsplatten für eine Schwenkbewegung gelagert ist.

Derartige Palettenhalter ermöglichen die Mitnahme einer leeren Palette hochkant am Gabelrücken. Die leere Palettenmitnahme dient dazu, den Fahrzeugschwerpunkt und damit die Fahrstabilität mit einer vollen Palette auf langen Gabeln zu verbessern, da die volle Palette näher an der Hubeinheit aufgenommen werden kann. Auf der zweiten Palette wird kommissioniert, sobald die erste voll ist. Dazu wird die volle Palette auf der Gabel nach vorn geschoben und die Leerpalette nach vorn auf die Lastgabel gekippt.

Der Erfindung liegt die Aufgabe zugrunde, bei einem Flurförderzeug der eingangs genannten Art den Bedienkomfort zu verbessern und Kommissioniervorgänge zeitlich zu optimieren.

Diese Aufgabe wird durch die Merkmale des Anspruchs 1 gelöst.

Bei dem erfindungsgemäßen Flurförderzeug ist das Halteelement, das die Palette auf der Lastgabel hochkant hält, in Richtung der Längsachse des Flurförderzeugs bewegbar gelagert und in unterschiedlichen Längspositionen verriegelbar.

Bei der Erfindung wird davon ausgegangen, dass, etwa im Logistikbereich, unterschiedlich bemaßte Paletten verwendet werden und in einem Lager eine Mischung unterschiedlicher Paletten vorhanden sein kann. Es ist erwünscht, unterschiedlich dimensionierte Paletten mit Hilfe eines Palettenhalters hochkant halten zu können. Diese Möglichkeit ist mit der Erfindung gegeben. Durch die Längsverstellung des Halteelements in Richtung der Längsachse des Flurförderzeugs kann die Aufnahme unterschiedlich hoher Paletten ermöglicht werden oder auch eine Mehrzahl von Paletten. Hierzu muss lediglich eine Längsverstellung des Halteelements vorgenommen werden, um verschiedenartige leere Paletten hochkant am Gabelrücken zu fixieren. Nach einer Ausgestaltung der Erfindung ist das Halteelement in der Freigabeposition verrastbar. Ferner wird bevorzugt eine Federvorspannung für das Halteelement verwendet, welche das Halteelement in die Halteposition vorspannt. Eine Verrastung des Halteelements in der Halteposition kann sich dadurch erübrigen.

Bei der Erfindung ist das Halteelement ein Winkelelement, dessen erster Schenkel in der Halteposition die Palette hintergreift und dessen zweiter Schenkel um eine horizontale Achse schwenkbar am Gabelrahmen gelagert ist.

Es sind nach einer weiteren Ausgestaltung der Erfindung mindestens zwei in Querrichtung des Lastteils beabstandet angeordnete Halteelemente auf einer Welle angebracht, die federvorgespannt am Gabelrahmen gelagert ist. Zur Längsverschiebbarkeit des Halteelements sieht eine weitere Ausgestaltung der Erfindung vor, dass der zweite Schenkel des Winkelelements einen drehbar mit dem Gabelrahmen verbundenen Lagerabschnitt und einen mit dem anderen Schenkel verbundenen Verschiebeabschnitt aufweist, wobei der Verschiebeabschnitt am Lagerabschnitt verschiebbar gelagert und in unterschiedlichen Verschiebestellungen feststellbar ist. Eine Möglichkeit der Feststellbarkeit ist die Verrastung des Verschiebeabschnitts im Lagerabschnitt. Eine andere Möglichkeit besteht in einer weiteren Ausgestaltung der Erfindung darin, dass zwischen Lagerabschnitt und Verschiebeabschnitt eine Klemmschraube wirkt, die Lagerabschnitt und Verschiebeabschnitt in beliebigen Stellungen gegeneinander festklemmt. Hierbei lässt sich der Abstand einer Haltefläche am Halteelement zum Gabelrücken beliebig einstellen. Allerdings erfordert dies eine gewisse Sorgfalt.

Nach einer weiteren Ausgestaltung der Erfindung ist vorgesehen, dass das Halteelement ein Winkelelement ist, dessen erster Schenkel am Gabelrahmen achsparallel verschiebbar gelagert ist und der zweite Schenkel am ersten Schenkel um eine Längsachse des zweiten Schenkels verschwenkbar gelagert ist und sowohl in der Halte- als auch in der Freigabeposition am ersten Schenkel feststellbar ist.

Eine weitere Ausgestaltung der Erfindung sieht vor, dass Lagerabschnitt und Verschiebeabschnitt ein Querschnittsprofil aufweisen, in dem der Verschiebeabschnitt bzw. der Lagerabschnitt verschiebbar ist.

Eine weitere Ausgestaltung der Erfindung sieht vor, dass am Halteelement bzw. am Lagerabschnitt ein Greifabschnitt angeordnet ist, der zum Verschwenken des Halteelements bzw. des Winkelelementes manuell greifbar ist.

Die erfindungsgemäße Aufgabe wird auch dadurch gelöst, dass Lagerschenkel von zwei oder mehr winkelförmigen Halteelementen im oberen Bereich des Gabelrahmens um eine horizontale Achse schwenkbar gelagert sind, und der andere Schenkel des Winkelelements als Halteschenkel ausgebildet ist, wodurch die Halteelemente in der Halte- bzw. Freigabeposition klappbar sind und die Lagerschenkel der Halteelemente eine unterschiedliche Länge aufweisen. Bei Bedarf wird das jeweilige Halteelement nach vorn geklappt, während das andere nach hinten geklappt bleibt. Naturgemäß können auch Paare von unterschiedlich ausgebildeten Halteelementen vorgesehen werden, die passend zur jeweiligen aufgestellten Palette in Form und Länge voneinander abweichen.

Eine weitere erfindungsgemäße Lösung besteht darin, dass mindestens zwei Halteelemente um eine horizontale, zur Längsachse des Flurförderzeugs parallele Achse am Gabelrahmen schwenkbar gelagert sind, die jeweils eine dem Gabelrahmen zugekehrte Haltefläche aufweisen, wobei die Halteflächen der Halteelemente einen unterschiedlichen Abstand zum Gabelrahmen aufweisen. Je nach Abmessung der hochgestellten Palette wird dasjenige Halteelement in die Halteposition verschwenkt, bei dem der Abstand zwischen der Haltefläche und dem Gabelrahmen der Dimensionierung der Palette entspricht. Nach einer Ausgestaltung der Erfindung hierzu können jeweils zwei Halteelemente als Arme eines doppelarmigen Hebels ausgebildet sein.

Ein Ausführungsbeispiel der Erfindung wird nachfolgend anhand von Zeichnungen näher erläutert.
- Fig. 1: zeigt perspektivisch ein Kommissionier-Flurförderzeug mit Palettenhaltern nach der Erfindung.
- Fig. 2: zeigt vergrößert einen Teil des Fahrzeugs nach Fig. 1 mit drei hochkant gehaltenen verschiedenen Paletten.
- Fig. 3: zeigt einen Schnitt durch die Darstellung nach Fig. 2 entlang der Linie 3-3.

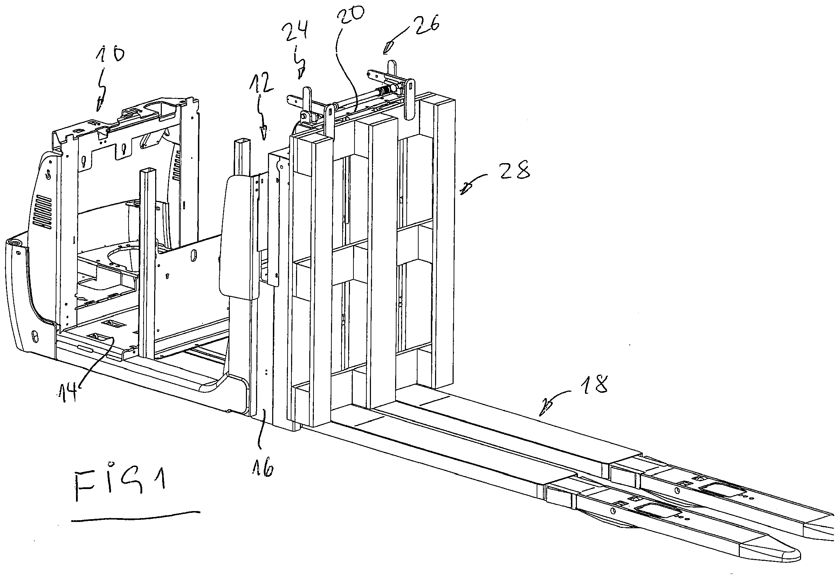

Fig. 1 zeigt in perspektivischer Ansicht schräg von der Seite und von vorn einen Horizontalkommissionierer mit einem Antriebsteils 10 und einem Lastteil 12. Das Antriebsteil 10 ist nur schematisch dargestellt (z. B. ohne Antrieb) und eine das Fahrzeug steuernde Deichsel ist fortgelassen. Das Antriebsteil besitzt einen Fahrerstandplatz 14, auf dem stehend der Fahrer die nicht gezeigte Deichsel und entsprechende Bedienelemente betätigen kann.

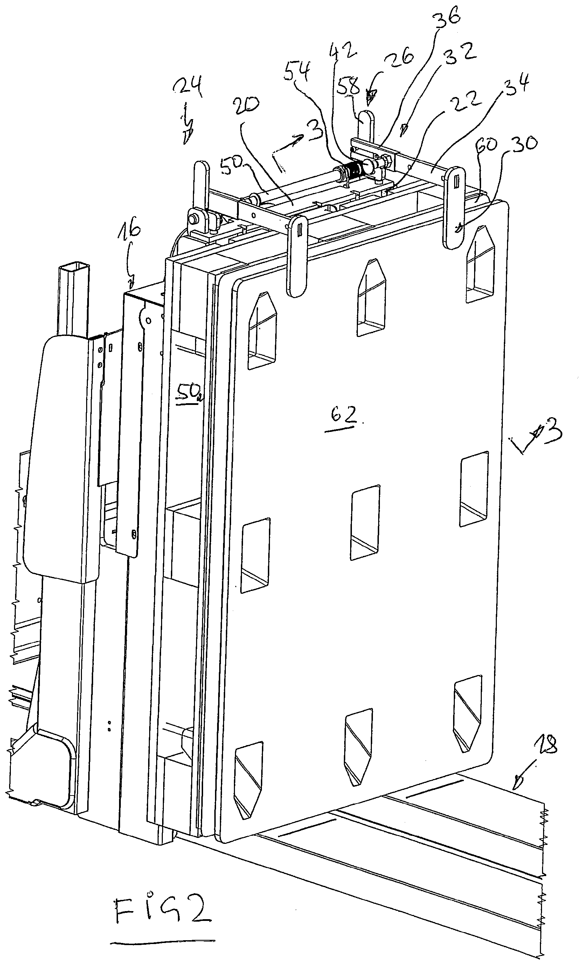

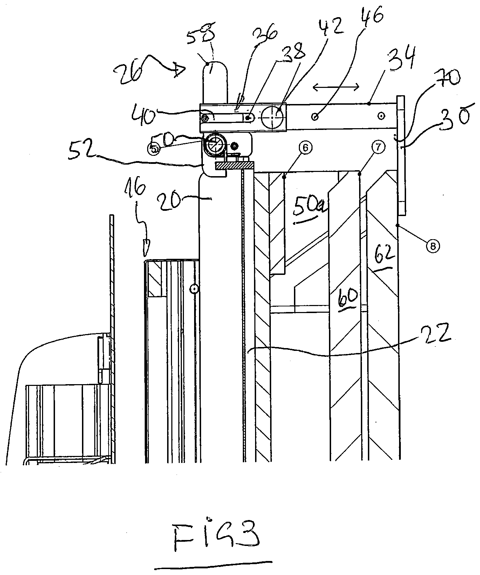

Das Lastteil 12 ist mit einem rückwärtigen Rahmen 16 an dem Antriebsteil 10 bzw. dem entsprechenden Fahrzeugrahmen befestigt. An einem Gabelrahmen 20 ist eine Lastgabel 18 angebracht mit zwei parallel beabstandeten Gabelarmen, wie an sich bekannt. Ihre Länge ist derart, dass sie zwei Paletten hintereinander aufnehmen kann. An dem Rahmen 16 ist der Gabelrahmen 20 höhenverschiebbar gelagert. Er wird mit Hilfe einer geeigneten Hydraulik betätigt, um wahlweise den sogenannten Freihub auszuführen. Wie in Fig. 2 bei 22 angedeutet und auch in Fig. 3 zu erkennen, weist der Gabelrahmen an der der Lastgabel 18 zugekehrten Seite parallel beabstandete vertikale Rippen auf. Sie dienen als Prallschutz beim Aufnehmen einer Palette. Eine derartige Maßnahme ist allgemein bekannt.

Beim Hochfahren in den Freihub werden auch Lasträder betätigt, die am vorderen Ende der Gabelarme gelagert sind. Dies ist ebenfalls bekannt und soll nicht weiter erörtert werden.

Wie aus den Fign. 1 und 2 hervorgeht, sind an der Oberseite des Gabelrahmens 20 zwei Palettenhalter 24, 26 angeordnet. In Fig. 1 halten diese eine Euro-Palette 28, die hochkant auf die Gabel 18 gestellt ist in Anlage an dem Gabelrahmen 20.

Der Aufbau der Palettenhalter 24, 26 geht deutlicher aus den Fign. 2 und 3 hervor. Nachstehend wird nur der Palettenhalter 26 detailliert beschrieben. Der Palettenhalter 24 ist identisch aufgebaut.

Wie erkennbar, weist der Palettenhalter 26 ein Winkelelement auf mit einem ersten vertikalen Schenkel 30 und einem zweiten horizontalen Schenkel 32. Der zweite Schenkel 32 weist einen schienenartigen Verschiebeabschnitt 34 und einen Lagerabschnitt 36 auf. Der Lagerabschnitt 36 hat ein Hohlprofil, in dem der schienenartige Abschnitt 34 verschiebbar ist. Die Verschiebung nach rechts in Fig. 2 bzw. von dem Gabelrahmen 20 fort, wird begrenzt durch einen Stift 38 des Schienenabschnitts 34, der in einen Schlitz 40 des Lagerabschnitts 36 verschiebbar ist.

Der Lagerabschnitt 36 weist einen Feststellknopf 42 auf, der von einer nicht gezeigten Feder vorbelastet und mit einem Stift (ebenfalls nicht gezeigt) verbunden ist, der gegen den Schienenabschnitt 34 innerhalb des Lagerabschnitts 36 anliegt. Im Schienenabschnitt 34 sind Vertiefungen 46 vorgesehen, in welche der Stift des Knopfes 42 einrasten kann, um den Abstand des ersten Schenkels 30 vom Gabelrahmen 20 zu verändern.

Der Lagerabschnitt 36 ist fest mit einer Welle 50 verbunden, die sich horizontal oberhalb des Gabelrahmens 20 erstreckt. Mit der Welle 50 ist auch der Lagerabschnitt des zweiten Palettenhalters 24 verbunden.

Mit dem Gabelrahmen 20 sind auf der Oberseite Lagerbauteile 52 für die Welle 50 verbunden. Die Welle ist mit Hilfe einer Feder 54 vorgespannt derart, dass die Feder versucht, den Lagerabschnitt 36 im Uhrzeigersinn zu drehen. Mit anderen Worten, die Feder 54 spannt den Palettenhalter 26 in die in den Fign. 2 und 3 dargestellte Halteposition vor.

Mit der Welle 50 ist an beiden Enden jeweils ein Griffabschnitt 58 verbunden, um den Palettenhalter 26 bzw. 24 zu betätigen. In den Fign. 2 und 3 sind eine Euro-Palette 50a (siehe auch Fig. 1) und zwei anders dimensionierte Paletten 60 und 62 aufrecht stehend am Lastteil 12 gehalten. Soll nur z. B. eine der gezeigten Paletten hochkant gehalten werden, wird durch Betätigen des Knopfes 42 die Verrastung des Schienenabschnitts 34 im Lagerabschnitt 36 aufgehoben und der Schienenabschnitt 34 kann etwa in Richtung des Gabelrahmens 20 verschoben werden, bis eine Haltefläche 70 des ersten Schenkels 30 einen Abstand zum Gabelrahmen 20 hat, der der Höhe der aufgenommenen Palette entspricht.

Aus der Beschreibung und den Darstellungen ist ersichtlich, dass in einem Lager verschiedene Paletten vermischt werden können und gleichwohl möglich ist, diese, unabhängig von ihrer Dimensionierung, am Lastteil hochkant festzulegen. Bei der Mitnahme von zwei Paletten werden Wege gespart, da mit dem Fahrzeug eine weitere Palette mitgenommen und kommissioniert werden kann. Nach dem Kommissionieren wird die volle Palette am Lagerplatz abgestellt, während die hintere Palette vorn auf den Gabeln aufgenommen werden kann und die freie Palette am Lastteil heruntergeklappt wird. Dadurch wird der Weg zu einer Palettensammelstation gespart und man kann im Prinzip drei Paletten kommissionieren mit einem Fahrzeug, das für zwei Paletten ausgelegt ist.

Es sei noch angemerkt, dass es möglich ist, die Palettenhalter 24, 26 auch in der Halteposition, wie sie in den Fign. 2 und 3 gezeigt ist, zu verriegeln oder zu verrasten. Da die Feder 54 jedoch die Palettenhalter in die Halteposition vorspannt, kann sich dies erübrigen. Eine Verrastung ist gegebenenfalls wünschenswert beim Hochschwenken der Palettenhalter 24, 26 in die nicht gezeigte Freigabeposition.

## Patentansprüche

1. Flurförderzeug mit einem Antriebsteil und einem Lastteil, das eine Lastgabel und einen Gabelrahmen aufweist sowie mindestens einen Palettenhalter, mit dem eine auf der Lastgabel stehende Palette gesichert wird, wobei der Palettenhalter mindestens ein im Bereich des oberen Endes des Gabelrahmens angeordnetes Halteelement aufweist, das zwischen einer Halteposition, in der es die Palette hintergreift und einer Freigabeposition, in der es die Palette freigibt, bewegbar gelagert ist,
**dadurch gekennzeichnet, dass**
das Halteelement (24, 26) ein Winkelelement ist, dessen erster Schenkel (30) in der Halteposition die Palette (50a, 60, 62) hintergreift und dessen zweiter Schenkel (32) um eine horizontale Achse verschwenkbar an dem Gabelrahmen (20) gelagert ist, wobei der erste Schenkel in Richtung der Längsrichtung des Flurförderzeugs bewegbar gelagert und in unterschiedlichen Längspositionen verriegelbar ist, um in der Halteposition eine oder mehrere Paletten zu hintergreifen.

2. Flurförderzeug nach Anspruch 1, **dadurch gekennzeichnet, dass** das Halteelement in die Halteposition vorgespannt ist und gegebenenfalls in der Freigabeposition verrastbar ist.

3. Flurförderzeug nach Anspruch 1 oder 2, **dadurch gekennzeichnet, dass** mindestens zwei in Querrichtung des Lastteils (12) beabstandet angeordnete Halteelemente (24, 26) an einer Welle (50) angebracht sind, die federvorgespannt am Gabelrahmen (20) drehbar gelagert ist.

4. Flurförderzeug nach einem der Ansprüche 1 oder 3, **dadurch gekennzeichnet, dass** der zweite Schenkel (32) des Winkelelements einen drehbar mit dem Gabelrahmen (20) verbundenen Lagerabschnitt (36) und einen mit dem ersten Schenkel (30) verbundenen Verschiebeabschnitt (34) aufweist, wobei der Verschiebeabschnitt (34) am Lagerabschnitt (36) verschiebbar gelagert und in unterschiedlichen Verschiebestellungen feststellbar ist.

5. Flurförderzeug nach Anspruch 4, **dadurch gekennzeichnet, dass** der Verschiebeabschnitt (34) in bestimmten Verschiebestellungen an dem Lagerabschnitt (36) verrastet ist.

6. Flurförderzeug nach Anspruch 4, **dadurch gekennzeichnet, dass** zwischen Lagerabschnitt (36) und Verschiebeabschnitt (34) eine Klemmschraube wirkt, die Lagerabschnitt und Verschiebeabschnitt in beliebigen Stellungen gegeneinander festklemmt.

7. Flurförderzeug nach Anspruch 1 oder 2, **dadurch gekennzeichnet, dass** das Halteelement ein Winkelelement ist, dessen erster Schenkel am Gabelrahmen achsparallel verschiebbar gelagert ist, der zweite Schenkel am ersten Schenkel um eine Längsachse des zweiten Schenkels verschwenkbar ist und sowohl in der Halte- als auch in der Freigabeposition am ersten Schenkel feststellbar ist.

8. Flurförderzeug nach einem der Ansprüche 4 bis 7, **dadurch gekennzeichnet, dass** der Lagerabschnitt (36) oder Verschiebeabschnitt (34) ein Querschnittsprofil aufweisen, in dem der Verschiebeabschnitt bzw. Lagerabschnitt verschiebbar ist.

9. Flurförderzeug nach einem der Ansprüche 4 bis 8, **dadurch gekennzeichnet, dass** am Halteelement bzw. Lagerabschnitt (36) ein Greifabschnitt (58) angeordnet ist, der zum Verschwenken des Halteelements bzw. des Winkelelements manuell greifbar ist.

10. Flurförderzeug nach einem der Ansprüche 1 bis 9, **dadurch gekennzeichnet, dass** mindestens zwei Halteelemente um eine horizontale, zur Längsachse des Flurförderzeugs parallele Achse am Gabelrahmen schwenkbar gelagert sind, die jeweils eine den Gabelrahmen zugekehrte Haltefläche aufweist, wobei die Halteflächen der Halteelemente einen unterschiedlichen Abstand zum Gabelrahmen aufweisen.

## Claims

1. An industrial truck with a drive unit and a load unit which comprises a load fork and a fork frame, and with at least one palette holder by which a palette standing on the load fork is secured, wherein the palette holder comprises at least one holding element arranged in the region of the upper end of the fork frame and movably mounted between a holding position in which it rear-grips the palette, and a release portion in which it releases the palette,
**characterised in that**
the holding element (24, 26) is an angled element, whose first leg (30) rear grips the palette (50a, 60, 62) in the holding position and whose second leg (32) is pivotally mounted around a horizontal axis in the fork frame (20), wherein the first leg is movably mounted in the direction of the longitudinal direction of the industrial truck and can be locked in different longitudinal positions in order to rear-grip one or several palettes in the holding position.

2. The industrial truck according to claim 1, **characterised in that** the holding element is preloaded into the holding position and can be locked in the release position if needed.

3. An industrial truck according to claim 1 or 2, **characterised in that** at least two holding elements (24, 26) spaced-apart arranged in the transverse direction of the load portion (12) are attached to a beam (50), which is spring-preloaded rotatably mounted on the fork frame (20).

4. An industrial truck according to any one of the claims 1 to 3, **characterised in that** the second leg (32) of the angled element comprises a mounting section (36) rotatably connected to the fork frame (20) and a shifting section (34) connected to the first leg (30), wherein the shifting section (34) is movably mounted on the mounting section (36) and can be locked in different shifting positions.

5. The industrial truck according to claim 4, **characterised in that** the shifting section (34) is locked on the mounting section (36) in defined shifting positions.

6. The industrial truck according to claim 4, **characterised in that** a clamping screw acts between the mounting section (36) and the shifting section (34) and clamps the mounting section and the shifting section against each other in arbitrary positions.

7. An industrial truck according to claim 1 or 2, **characterised in that** the holding element is an angled element whose first leg is axis-parallel movably mounted on the fork frame, the second leg can be swung around a longitudinal axis of the second leg on the first leg and can be locked on the first leg in the holding position as well as in the releasing position.

8. An industrial truck according to any one of the claims 4 to 7, **characterised in that** the mounting section (36) or the shifting section (34) have a cross-section profile in which the shifting section or the mounting section can be shifted.

9. An industrial truck according to any one of the claims 4 to 8, **characterised in that** a grasping section (58) is arranged on the holding element or on the mounting section (36) which can be manually grasped in order to swing the holding element or the angled element.

10. An industrial truck according to any one of the claims 1 to 9, **characterised in that** at least two holding elements are pivotally mounted on the fork frame around a horizontal axis parallel to the longitudinal axis of the industrial truck, each one comprising a holding surface facing the fork frame, wherein the holding surfaces of the holding elements have different distances form the fork frame.

## Revendications

1. Chariot de manutention avec une partie motrice et une partie de charge qui comporte une fourche de charge et un cadre de fourche, et avec au moins un support de palettes par lequel une palette débout sur la fourche de charge est sécurisée, le support de palettes comportant au moins un élément d'immobilisation arrangé dans la zone de l'extrémité supérieure du cadre de fourche et monté de manière mobile entre une position d'immobilisation dans laquelle il vient en prise par derrière de la palette, et une position de déverrouillage dans laquelle il libère la palette,
**caractérisé en ce que**
l'élément d'immobilisation (24, 26) est un élément d'angle, dont la première branche (30) vient en prise par derrière de la palette (50a, 60, 62) dans la position d'immobilisation et dont la deuxième branche (32) est montée de manière pivotante autour d'un axe horizontal dans le cadre de fourche (20), la première branche étant montée de manière mobile dans la direction de l'axe longitudinal du chariot de manutention et pouvant être verrouillée dans des positions longitudinales différentes afin de venir en prise par derrière d'une ou plusieurs palettes dans la position d'immobilisation.

2. Chariot de manutention selon la revendication 1, **caractérisé en ce que** l'élément d'immobilisation est précontraint vers la position d'immobilisation et peut être verrouillé dans la position de déverrouillage le cas échéant.

3. Chariot de manutention selon la revendication 1 ou 2, **caractérisé en ce que** au moins deux éléments d'immobilisation (24, 26), arrangés de manière espacée dans la direction transversale de la partie de charge (12), sont accrochés sur un arbre (50), qui est monté de manière rotative et précontraint par ressort sur le cadre de fourche (20).

4. Chariot de manutention selon l'une quelconque des revendications 1 à 3, **caractérisé en ce que** la deuxième branche (32) de l'élément d'angle comporte une section de palier (36) reliée de manière rotative au cadre de fourche (20) et une section de déplacement (34) reliée à la première branche (30), la section de déplacement (34) étant montée de manière mobile sur la section de palier (36) et pouvant être fixée dans des positions de déplacement différentes.

5. Chariot de manutention selon la revendication 4, **caractérisé en ce que** la section de déplacement (34) prend l'encoche dans la section de palier (36) dans des positions de déplacement définies.

6. Chariot de manutention selon la revendication 4, **caractérisé en ce que** une vis de serrage agit entre la section de palier (36) et la section de déplacement (34) et serre la section de palier et la section de déplacement l'une contre l'autre dans des positions arbitraires.

7. Chariot de manutention selon la revendication 1 or 2, **caractérisé en ce que** l'élément d'immobilisation est un élément d'angle dont la première branche est montée de manière déplaçable parallèle à l'axe sur le cadre de fourche, la deuxième branche peut pivoter autour d'un axe longitudinal de la deuxième branche sur la première branche et peut être fixée sur la première branche dans la position d'immobilisation aussi bien que dans la position de déverrouillage.

8. Chariot de manutention selon l'une quelconque des revendications 4 à 7, **caractérisé en ce que** la section de palier (36) ou la section de déplacement (34) ont un profil de coupe transversale dans lequel la section de déplacement ou respectivement la section de palier peuvent être déplacées.

9. Chariot de manutention selon l'une quelconque des revendications 4 à 8, **caractérisé en ce que** une section de saisie (58) est arrangée sur l'élément d'immobilisation ou sur la section de palier (36) qui peut être saisie à main afin de pivoter l'élément d'immobilisation ou l'élément d'angle.

10. Chariot de manutention selon l'une quelconque des revendications 1 à 9, **caractérisé en ce que** au moins deux éléments d'immobilisation sont montés de manière pivotante autour d'un axe horizontal parallèle à l'axe longitudinal du chariot de manutention sur le cadre de fourche, dont chacun comporte une surface de retenue vis-à-vis du cadre de fourche, les surfaces de retenue des éléments d'immobilisation ayant des distances différentes du cadre de fourche.
